## Europäisches Patentamt

## European Patent Office

## Office européen des brevets

(19)

(11) Veröffentlichungsnummer: **0 079 023**
**B1**

(12)

# EUROPÄISCHE PATENTSCHRIFT

(45) Veröffentlichungstag der Patentschrift:
14.10.87

(21) Anmeldenummer: **82110077.3**

(22) Anmeldetag: **02.11.82**

(51) Int. Cl.⁴: **A 23 J 3/00, A 23 L 1/30**

(54) **Funktionelle Eiweisshydrolysate, Verfahren zu ihrer Herstellung, Verwendung dieser Eiweisshydrolysate als Nahrungsmittelzusatz und diese Eiweisshydrolysate enthaltende Nahrungsmittel.**

(30) Priorität: **05.11.81 DE 3143947**

(43) Veröffentlichungstag der Anmeldung:
**18.05.83 Patentblatt 83/20**

(45) Bekanntmachung des Hinweises auf die Patenterteilung:
**14.10.87 Patentblatt 87/42**

(84) Benannte Vertragsstaaten:
**AT BE CH DE FR GB IT LI NL SE**

(56) Entgegenhaltungen:
**FR-A-2 359 896**
**FR-A-2 367 773**
**GB-A-2 043 651**

(73) Patentinhaber: **HOECHST AKTIENGESELLSCHAFT, Postfach 80 03 20, D-6230 Frankfurt am Main 80 (DE)**

(72) Erfinder: **Scharf, Udo, Dr., Drosselweg 5, D-6230 Frankfurt am Main 80 (DE)**
Erfinder: **Schlingmann, Merten, Dr., Schneidhainer Strasse 32a, D-6240 Königstein/Taunus (DE)**
Erfinder: **von Rymon Lipinski, Gert- Wolfhard, Dr., Hunsrückstrasse 40, D-6230 Frankfurt am Main 80 (DE)**

EP 0 079 023 B1

# 0 079 023

**Beschreibung**

Gegestand der Erfindung sind aus mikrobiellen Proteinen gewonnene funktionelle Eiweißhydrolysate, Verfahren zu ihrer Herstellung, sowie Nahrungsmittel, die mit dem genannten Eiweißhydrolysaten zubereitet sind und dadurch in ihren lebensmitteltechnologischen Eigenschaften verbessert werden.

Die Herstellung von mikrobiellen Proteinen ist in vielen Veröffentlichungen bereits beschrieben worden. Ein besonders vorteilhaftes Verfahren ist aus der deutschen Patentschrift 2 633 451 bekannt, bei dem eine proteinreiche Bakterienzellmasse durch Züchtung von Bakterien dies Stammes Methylomonas clara ATCC 31 226 in einem Methanol enthaltenden Nährmedium gewonnen wird. Aus dem so gewonnenen Bioprotein läßt sich ein für Nahrungsmittelzwecke geeignetes Eiweißisolat herstellen, in dem nach dem Verfahren der DE-AS 2 633 666 durch Extraktion mit einem besonderen Lösungsmittelgemisch der Lipid- und Nucleinsäuregehalt erheblich reduziert wird. Ohne die Verminderung des in mikrobiell hergestellten Proteinen besonders hohen Gehaltes an Nucleinsäuren sind derartige Bioproteine für Nahrungsmittelzwecke, insbesondere für die menschliche Ernährung, nicht einsetzbar, da die Nucleinsäuren im menschlichen Organismus nicht vollständig abgebaut und Abbauprodukte nur in unzureichendem Maße ausgeschieden werden. Es kann deshalb zur Anreicherung von Nucleinsäure-Abbauprodukten im Organismus kommen und dadurch krankhafte Erscheinungen wie Gicht hervorgerufen werden.

Obwohl die nach dem Verfahren der DE-AS 2 633 666 gewonnenen Eiweißisolate hochwertige Proteine sind, sind ihrem Einsatz in Nahrungsmitteln Grenzon gesetzt, weil ihre lebensmitteltechnologischen Eigenschaften noch nicht allen Anforderungen genügen. Von neuen Eiweißstoffen werden neben guten ernährungsphysiologischen Eigenschaften je nach dem vorgesehenen Einsatzgebiet eine gute Löslichkeit oder Suspendierbarkeit, eine hohe Schäumbarkeit und Schaumstabilität, sowie eine den jeweiligen Ansprüchen genügende Ölbindefestigkeit und Emulsionskapazität verlangt. Welche dieser funktionellen Eigenschaften vor allem benötigt wird, hängt von der jeweils vorgesehenen Anwendung des Proteins ab. Soll es beispielsweise zur Verbesserung der Eigenschaften einer Mayonnaise verwendet werden, dann wird von ihm vor allem die Fähigkeit verlangt, Emulsionen stabilisieren zu können. Soll es dagegen in einem Schaumgebäck wie einem Baiser angewendet werden, dann wird man von einem dazu geeigneten Eiweiß vor allem hohe Schäumbarkeit und Schaumstabilität verlangen. Ist dagegen sein Einsatz als Kaffeeaufheller geplant, dann ist es neben der Emulsionskapazität besonders wichtig, daß das Eiweiß gut löslich ist.

Um diesen vielfältigen Anforderungen gerecht zu werden, hat es deshalb schon zahlreiche Vorschläge zur Modifizieiung von Proteinen gegeben. So sind aus der offengelegten japanischen Patentanmeldung Sho 53-6491 bereits zur Schaumbildung geeignete, wasserlösliche Eiweißstoffe bekannt, die durch proteolytischen Abbau mikrobiell hergestellter Proteine gewonnen werden. Die so erhaltenen Eiweißstoffe sollen auch zur Schaumbildung in Feuerlöschmitteln und im Zement einsetzbar sein.

Aus der britischen Patentanmeldung 2 043 651 ist ein Verfahren zur Herstellung eines von Proteinen und Makropeptiden befreiten Eiweißhydrolysats durch Anwendung der Ultrafiltration bekannt. Dadurch wird ein Gemisch von Peptiden niedrigen Molekulargewichtes erhalten, das als diätetisches Lebensmittel eingesetzt werden kann. Die Herstellung von funktionellen Eiweißhydrolysaten wird dort nicht beschriebem;

In der deutschen Offenlegungsschrift 2 745 954 wird ein Verfahren zur Herstellung von funktionellem Protein beschrieben, bei dem ungereinigtes, natürliches Protein unterschiedlichen Ursprungs in wäßrigem Medium bis zur Proteinfällung erhitzt und das ausgefällte und abgetrennte Protein dann mit proteolytischen Enzymen behandelt hird. Das erhaltene Eiweißhydrolysat soll keinen bitteren Geschmack aufweisen und sich vor allem durch eine gute Wasserlöslichkeit und Wärmestabilität über einen weiten pH-Bereich auszeichnen. Soweit mikrobielle Proteine eingesetzt werden, werden als Ausgangsprodukte Bakterien, Hefen und Schimmelpilze genannt. Den gewonnenen Eiweißprodukten werden zwar generell funktionelle Eigenschaften zugeschrieben, diese Eigenschaften aber nicht genauer charakterisiert und auch nicht dargelegt, welche Anwendungsmöglichkeiten sich aufgrund spezieller funktioneller Eigenschaften ergeben.

Es stellte sich deshalb die Aufgabe, ernährungsphysiologisch hochwertige und geschmacklich einwandfreie Eiweißhydrolysate herzustellen, die aufgrund ihrer spezifischen lebensmitteltechnologischen Eigenschaften in der Lage sind, ganz spezielle Funktionen bei der Verarbeitung zu hochwertigen Nahrungsmitteln zu übernehmen. Diese Aufgahe sollte auf der Grundlage von mikrobiellen Eiweißstoffen gelöst werden, wie sie z. B. nach dem Verfahren der deutschen Patentschrift 26 33 451 oder anderen Verfahren zugänglich sind, in denen Mikroorganismen zur Proteinbildung eingesetzt werden.

Diese Aufgabe konnte erfüllungsgemäß durch ein Verfahren zur Herstellung eines funktionellen Hydrolysats aus mikrobiellen Eiweißisolaten gelöst werden, das dadurch gekennzeichnet ist, daß eine mikrobielle Biomasse zunächst mit einer weitgehend wasserfreien Extraktionsmischung aus Methanol/Ammoniak zur Verminderung ihres Lipidgehalts und anschließend mit Wasser zur Verminderung des Nukleinsäuregehaltes behandelt wird und dann die Gesamtproteinbiomasse durch eine oder mehrere Endoproteasen enzymatisch hydrolysiert wird. Dabei erhält man ein Produkt, das
- einen Proteingehalt von über 90 Gew.-%,
- einen Nukleinsäuregehalt unter 2 Gew.-%,
- einen Lipidgehalt unter 1 Gew.-%,
- eine Suspendierbarkeit von 80 bis 100 %,
- eine Schäumbarkeit, charakterisiert durch eine Verschäumungszeit von 4 bis 7,
- eine Schaumstabilität, charakterisiert durch eine Halbwertzeit von 10 bis 300 Minuten,

2

- eine Emulgierfähigkeit, charakterisiert durch eine Emulsionskapazität von 300 bis 500 ml Öl/g Protein und
- ein Molekulargewicht zwischen 125 000 und 100 Dalton aufweist.

Die vorstehend genannte Kombination wichtiger lebensmitteltechnologischer Eigenschaften, unter denen insbesondere die gute Schäumbarkeit und Schaumstabilität bei gleichzeitig hoher Emulgierfähigkeit hervorzuheben sind, gibt dem Fachmann sofort einen ersten Hinweis auf mögliche Einsatzgebiete derartiger Eiweißhydrolysate. Immer dann, wenn Nahrungsmittel eine aufgelockerte Struktur haben sollen, gleichzeitig aber wasserlösliche und fettlösliche Bestandteile enthalten, wie es z. B. bei Desserts, Back- und Teigwaren und Imitationskäsen der Fall ist, wird durch den Zusatz der vorstehend genannten Eiweißhydrolysate nicht nur eine ernährungsphysiologische Verbesserung erreicht, sondern auch die technologische Verarbeitung der Nahrungsmittel erleichtert.

Es gibt jedoch viele lebensmitteltechnologische Problemstellungen, die mit einem derartigen universellen Eiweißhydrolysat nicht mehr gelöst werden können. So gibt es beispielsweise Einsatzgebiete, in denen an die Schäumbarkeit und Schaumstabilität noch wesentlich höhere Anforderungen gestellt werden, wobei jedoch eine gute Emulgierfähigkeit weniger verlangt wird. Hierbei ist z. B. an schaumige Zuckerwaren wie Baisers, schaumiges Speiseeis, Dessertspeisen und ähnliches zu denken. Demgegenüber stehen auf anderen Einsatzgebieten die Forderungen nach einer hohen Emulgierfähigkeit im Vordergrund. Hierbei sind z. B. bestimmte Wurstwaren, Käseprodukte, Konditoreiwaren, Cremes, aber auch Mayonnaise und Salatsaucen oder andere Fettzubereitungen zu erwähnen.

Diese Aufgaben konnten nun durch bestimmte Fraktionen des vorstehend genannten Eiweißhydrolysats gelöst werden.

Erfindungsgegenstand ist deshalb auch eine Fraktion des funktionellen Eiweißhydrolysats der oben beschriebenen Art, die als Permeat nach dessen Auftrennung durch Ultrafiltration erhältlich ist und sich bei sonst gleichen Eigenschaften von diesem darin unterscheidet, daß es
- eine Löslichkeit von 100 %,
- eine Schäumbarkeit, charakterisiert durch eine Verschäumungszahl von 9 - 16,
- eine Schaumstabilität, charakterisiert durch eine Halbwertszeit von 20 bis 120 min,
- eine Emulgierfähigkeit, charakterisiert durch eine Emulsionskapazität von 30 bis 60 ml Öl/g Protein und
- ein Molekulargewicht zwischen 5000 und 100 Dalton aufweist.

Bei dieser Eigenschaftskombination fällt neben der guten Löslichkeit vor allem die hervorragende Schäumbarkeit auf, während die Emulgierfähigkeit nicht stark ausgeprägt ist.

Ein anderes Eigenschaftsbild zeigt jedoch das Retentat des ultrafiltrierten funktionellen Eiweißhydrolysats der oben beschriebenen Art, die bei sonst gleichen Eigenschaften sich dadurch auszeichnet, daß
- eine Suspendierbarkeit von 70 bis 90 %,
- eine Schäumbarkeit, charakterisiert durch eine Verschäumungszahl von 1 bis 3,
- eine Schaumstabilität, charakterisiert durch eine Halbwertszeit von 2 bis 1000 min,
- eine Emulgierfähigkeit, charakterisiert durch eine Emulsionskapazität von 400 bis 800 ml Öl/g Protein und
- ein Molekulargewicht zwischen 125 000 und 5000 Dalton gefunden wird.

Diese Fraktion zeichnet sich also durch eine besonders hohe Emulgierfähigkeit aus.

Das vorstehend an erster Stelle genannte, universell einsetzbare funktionelle Eiweißhydrolysat wird dadurch gewonnen, daß ein mikrobieller Eiweißstoff, vorzugsweise aus Bakterien, insbesondere aus Methylomonas clara ATCC 31 226 gewonnenes Protein zunächst einer Extraktionsbehandlung zur Verminderung seines Nucleinsäure- und seines Lipidgehaltes unterworfen wird und anschließend durch die Einwirkung einer oder mehrerer Endoproteasen hydrolytisch abgebaut wird. Die für den Einsatz der erfindungsgemäßen funktionellen Eiweißisolate als Nahrungsmittel wesentliche Verminderung des Nucleinsäure- und Lipidgehaltes der Proteinmasse kann zwar nach einer Reihe verschiedener Verfahren durchgeführt werden, die in der Regel durch einen alkalischen Aufschluß des Zellmaterials gekennzeichnet sind.

Erfindungsgemäß verfährt man jedoch gemäß der deutschen Auslegeschrift 26 33 666, nach der das Zellmaterial zunächst mit einer weitgehend bis völlig wasserfreien Extraktionsmischung aus einem Alkohol, wie Methanol, und Ammoniak zur Verminderung des Lipidgehaltes und anschließend mit Wasser zur Verminderung des Nukleinsäuregehalts behandelt wird.

Diese Methode ist wesentlich schonender als alle anderen Verfahren, verhindert einen Abbau oder eine Schädigung des Proteins und führt schon nach einer sehr kurzen Einwirkungszeit zu einer fast vollständigen Entfernung der Lipide und der Nucleinsäuren.

Zu der so gewonnenen Proteinmasse wird zur Hydrolyse zweckmäßig zunächst steril gefiltertes Trinkwasser gegeben, bis ein Trockensubstanzgehalt zwischen 10 und 20 Gewichts-% erreicht ist. Der pH-Wert der Suspension wird, zweckmäßig mit verdünnter NaOH, auf den für die Wirkung der zum Einsatz kommenden Protease optimalen pH-Wert eingestellt, der im allgemeinen zwischen 7,0 und 8,0 liegt. Zu der Suspension wird dann bei einer Temperatur zwischen 30 und 50°C die Protease zugegeben, wobei das Gewichtsverhältnis Enzym/Substrat zwischen 1:500 und 1:1000 liegen soll.

Die zum Einsatz kommenden Enzyme sind Endoproteasen, deren pH-Optimum vorzugsweise im neutralen Bereich liegt. Zur Erzielung eines geschmacklich guten Eiweißhydrolysats, das frei von jedem bitteren Geschmack ist, haben sich vor allem die Proteasen Alkalase 0,6 L, Corolase S 50, Trypsin PTN 3,0 S und α-Chymotrypsin, sowie Mischungen dieser Enzyme besonders bewährt.

Während der etwa 15 bis 240 min. dauernden Proteolyse wird die Temperatur des Ansatzes konstant gehalten. Dabei verschiebt sich der pH-Wert der Suspension langsam in den sauren Bereich. Es ist deshalb erforderlich, durch ständige Nachdosierung von Alkali, insbesondere verdünnter Natronlauge, dafür zu sorgen, daß der pH-Wert erhalten bleibt, der für die Wirkung des Enzyms optimal ist.

Nach dem Ende der Inkubation wird der Ansatz zur Inaktivierung des Enzyms erhitzt, vorzugsweise etwa 5 Min. auf 80°C. Das so erhaltene Hydrolysat kann direkt dem Trocknungsvorgang zugeführt oder durch Fraktionierung weiter zerlegt werden, um Eiweißhydrolysate mit hochspezifischen Eigenschaften zu erhalten. Die einfachste Möglichkeit zur Weiterbearbeitung des vorstehend beschriebenen Eiweißhydrolysats besteht darin, daß besonders hochmolekulare, nichtsuspendierbare Partikelchen mittels eines Separators abgetrennt werden. Das dann erhaltene Produkt hat dann zwar alle übrigen Eingenschaften des ursprünglichen Eiweißhydrolysates, zeichnet sich aber durch eine 100 %ige Suspendierbarkeit aus. Im allgemeinen muß die durch den Separator gewonnene Dünnphase jedoch durch Fraktionierung noch weiter zerlegt werden.

Zur Auftrennung der Separatordünnphase eignet sich vor allem die Ultrafiltration, wobei ein Plattenfilter oder Hohlfasern zur Anwendung kommen. Hierdurch wird eine Trennung in eine klarlösliche, niedermolekulare Fraktion, das Permeat, und in eine trübsuspendierbare, hochmolekulare Fraktion, das Retentat, erreicht. Das Permeat der Ultrafiltration ist ein klar wasserlösliches Peptidgemisch mit einer Molekulargewichtsverteilung zwischen 100 und 5000 Dalton. Es ist leicht verdaulich und eignet sich aus diesen Grund auch sehr gut sowohl zur Eiweißanreicherung flüssiger Nahrungsmittel als auch zur enteralen Ernährung frisch operierter Patienten. Besonders bemerkenswert bezüglich der funktionellen Eigenschaften dieser Fraktion ist aber, daß die schon im nicht-fraktionierten Eiweißhydrolysat vorhandenen Schäumungs- und Schaumstabilisierungseigenschaften in dieser niedermolekularen Fraktion konzentriert sind.

Dagegen stellt das Retentat der Ultrafiltration eine trübe Suspension dar, die nach Trocknung gut im Wasser suspendiert werden kann. Diese Fraktion zeigt sehr gute Emulsionsstabilisierungseigenschaften und kann deshalb als Emulgator in fettreichen Lebensmitteln Einsatz finden. Außerdem zeigt diese Fraktion ausgeprägte viskositätserhöhende Eigenschaften, die ihre Anwendung als Verdickungsmittel bei der Herstellung und Zubereitung von Lebensmitteln ermöglichen.

Eine besonders einfache Fraktionierung des durch Proteolyse erhaltenen Hydrolysats ist mit Hilfe eines Membranreaktors möglich. Hierbei ist es nämlich nicht mehr erforderlich, das Hydrolysat vor der Fraktionierung zu isolieren, sondern schon während der Hydrolyse wird die niedermolekulare Fraktion ständig abgetrennt, während die höhermolekularen Anteile als Retentat im Reaktor verbleiben.

Die nachfolgenden Beispiele erläutern die Herstellung, Ausprüfung und Anwendung der erfindungsgemäßen Eiweißhydrolysate. Prozentangaben beziehen sich auf das Gewicht, sofern nichts anderes angegeben ist.

Als Bakterienzellmasse wurde ein Produkt gemäß der deutschen Patentschrift 2 633 451, Beispiel 2, eingesetzt.

## Beispiel 1

100 g mikrobielles Proteinisolat, dessen Nucleinsäure- und Lipidgehalt nach dem Verfahren der deutschen Auslegeschrift 2 633 666 vermindert worden sind, werden in 900 ml Wasser suspendiert und der pH-Wert durch Zugabe von 4 N NaOH auf 8,0 eingestellt. Die Suspension wird auf 45°C vorinkubiert und mit 0,5 ml Alkalase 0.6 L (Fa. Novo) versetzt und 15 min. unter Rühren bei 45°C inkubiert. Zur Inaktivierung des Enzyms wird der Ansatz 5 min. auf 90°C erhitzt, der pH-Wert auf 7,0 eingestellt und die Suspension getrocknet.

## Beispiel 2

100 g mikrobielles Proteinisolat, dessen Nucleinsäure- und Fettgehält nach dem Verfahren der deutschen Auslegeschrift 2 633 666 vermindert worden sind, werden in 900 ml Wasser suspendiert und der pH-Wert durch Zugabe von 4 N NaOH auf 8,0 eingestellt. Die Suspension wird auf 45°C vorinkubiert und mit 100 mg Trypsin PTN 3.0S (Fa. Novo) versetzt und bei konstanten pH-Bedingungen 4 h unter Rühren bei 45°C inkubiert. Zur Inaktivierung des Enzyms wird der Ansatz 5 min. auf 80°C erhitzt, der pH-Wert auf 7,0 eingestellt und die Suspension getrocknet.

## Beispiel 3

Es wird wie im Beispiel 2 vorgegangen, jedoch die Proteolyse durch Zusatz von 150 mg Trypsin/Chymotrypsin 2/1S (Fa. Novo) durchgeführt, dann aber wie in Beispiel 2 weitergearbeitet.

4

**Beispiel 4**

Das in Beispiel 2 gewonnene Hydrolysat wird vor der Trocknung einer Ultrafiltration an einem Hollow-Fiber-Ultrafiltrationsystem (Fa. Amicon DC-2) mit Patronen einer Ausschlußgrenze von 100 000 Dalton (H1P 100) unterworfen. Retentat und Permeat werden getrennt gesammelt und getrocknet.

**Beispiel 5**

1 kg mikrobielles Proteinisolat, dessen Nukleinsäure- und Fettgehalt gemäß dem Verfahren der deutschen Auslegeschrift 2 633 666 verhindert worden sind, werden in 9 l Wasser suspendiert und der pH-Wert durch Zugabe von 4 N NaOH auf 8,0 eingestellt. Die Suspension wird in einem Enzymreaktor auf 45°C vorinkubiert und mit 1 g Trypsin PTN 3.0 S (Fa. Novo) versetzt und unter konstanten Temperatur- und pH-Bedingungon unter Rühren inkubiert. Nach 30 min. Inkubationszeit wird eine externe Umwälzung des Inkubationsansatzes über ein Hollow-Fiber-Ultrafiltrationssystem (Fa. Amicon DC-10) mit Patronen der Ausschlußgrenze 5000 Dalton (H 10 P5) in Betrieb genommen, das Retentat dem Enzymreaktor rückgeführt und das Flüssigkeitsvolumen mit Wasser korrigiert. Das Permeat wird gesammelt und getrocknet.

Nach Beendigung der Inkubationszeit wird das Enzym im Enzymreaktor durch Hitzebehandlung (5 min/80°C) inaktiviert und das Retentat getrocknet.

**Beispiel 6**

Die nach den Beispielen 1-5 gewonnenen mikrobiellen Proteinhydrolysate wurden auf ihre Löslichkeitseigenschaften geprüft:

100 ml einer 10 % Suspension werden auf den gewünschten pH-Wert eingestellt (HCl/NaOH), kurz homogenisiert und in einem vorgewogenen Zentrifugenglas bei 1500 g zentrifugiert. Der Überstand wird abdekantiert und das Sediment bei 100°C bis zur Gewichtskonstanz getrocknet. Das Glas mit Rückstand wird ausgewogen und die Löslichkeit berechnet.

| Produkte aus | Fraktion | Löslichkeit (%) bei pH | | |
|---|---|---|---|---|
| | | 3,0 | 5,0 | 7,0 |
| Beispiel 1 | - | 81 | 85 | 97 |
| Beispiel 2 | - | 77 | 90 | 91 |
| Beispiel 3 | - | 85 | 94 | 98 |
| Beispiel 4 | Permeat | 100 | 100 | 100 |
| | Retentat | 71 | 68 | 90 |
| Beispiel 5 | Permeat | 100 | 100 | 100 |
| | Retentat | 73 | 70 | 91 |

**Beispiel 7**

Die nach den Beispielen 1-5 gewonnenen Proteinhydrolysate wurden auf ihre Schäumungseigenschaften geprüft:

20 ml einer 5 % Suspension werden auf den gewünschten pH-Wert eingestellt (HCl/NaOH) und in einem 500 ml Meßzylinder mit einem Labor-Homogenisator ("Ultraturrax" der Fa. Jahnke & Kunkel, Typ T 45) über 1 min verschäumt. Es wurden bestimmt:

Verschäumungszahl: $\frac{\text{Schaumvolumen (ml)}}{\text{Ausgangsvolumen (ml)}}$

(in Anlehnung an: Lin, M.J.Y.; Humbert, E.S.: J. Food Sci. 39, 368 (1974)).

Schaumhalbwertszeit: Zeitspanne, bis 50 Vol.-% der Ausgangslösung wieder aus dem Schaum ausgetreten sind.

(in Anlehnung an: Satterlee, L.D.; Zachariah, N.Y.; Levin, E.: J. Food Sci. 38, 268 (1973)).

| | | Verschäumungszahl bei pH | | | | | | Halbwertszeit (min) bei pH | | | | | |
|---|---|---|---|---|---|---|---|---|---|---|---|---|---|
| Produkte aus | Fraktion | 3 | 4 | 5 | 6 | 7 | 8 | 3 | 4 | 5 | 6 | 7 | 8 |
| Beisp. 1 | - | 4,0 | 4,2 | 4,6 | 4,3 | 4,2 | 3,9 | 48 | 115 | 17 | 15 | 14 | 10 |
| Beisp. 2 | - | 4,5 | 5,5 | 5,8 | 6,0 | 6,2 | 4,5 | 300 | 210 | 150 | 40 | 20 | 15 |
| Beisp. 3 | - | 5,0 | 5,6 | 7,0 | 6,5 | 6,0 | 5,4 | 300 | 95 | 43 | 31 | 24 | 18 |
| Beisp. 4 | Permeat | 12,8 | 15,2 | 15,6 | 15,6 | 16,0 | 14,8 | 120 | 114 | 97 | 35 | 42 | 20 |
| | Retentat | 2,1 | 1,9 | 1,5 | 2,4 | 2,4 | 2,4 | 1000 | 1000 | 1000 | 1000 | 5 | 2 |
| Beisp. 5 | Permeat | 11,9 | 14,8 | 15,2 | 15,8 | 15,3 | 14,5 | 123 | 118 | 105 | 37 | 40 | 23 |
| | Retentat | 2,4 | 2,1 | 1,9 | 3,0 | 2,9 | 2,4 | 1000 | 1000 | 1000 | 915 | 7 | 4 |

## Beispiel 8

Die nach den Beispielen 1-5 gewonnenen Proteinhydrolysate wurden auf ihre Emulgierfähigkeit geprüft:
20 ml Produktlösung (10, 5, 1 bzw. 0,5 %) wurden auf den gewünschten pH-Wert eingestellt (HCl/NaOH) und mit 60-80 ml Sonnenblumenöl mit Hilfe eines Labor-Homogenisators ("Ultraturrax", Janke & Kunkel, Typ 18-10) emulgiert. Die Bewertung der entstehenden Emulsion erfolgte in Anlehnung an Aoki, H.; Nagamori, N.: Nippon Shokulin Kogyo Gakkaishi 27 (11), 550 (1980) durch Bestimmung der Viskosität (Viscotester Haake VT 181).

Die Emulsionskapazität ist definiert als ml Öl/g Protein (Kinsella, J.E.: Critical Reviews in Food Science and Nutrition 4, 219 (1976)):

| Produkt aus | Fraktion | Emulsionskapazität (ml Öl/g Protein) | |
|---|---|---|---|
| | | pH 5 | pH 7 |
| Beispiel 1 | - | 300 | 500 |
| Beispiel 2 | - | 500 | 500 |
| Beispiel 3 | - | 300 | 300 |
| Beispiel 4 | Permeat | 60 | 60 |
| | Retentat | 800 | 600 |
| Beispiel 5 | Permeat | 60 | 30 |
| | Retentat | 600 | 400 |

## Beispiel 9

Die Molekulargewichtsbestimmungen in den Produkten aus den Beispielen 1-3 und den Retentaten aus Beispiel 4 und 5 erfolgen über Gelchromatographie an (R)SEPHADEX G 100 in einem 48 % Harnstoff und 0,1 % Natrium-laurylsulfat enthaltenden Ammoniumacetat-Puffer vom pH 7,4.

| Produkt aus | Fraktion | Molekulargewicht |
|---|---|---|
| Beispiel 1 | - | 100 - 125 000 Dalton |
| Beispiel 2 | - | 100 - 125 000 Dalton |
| Beispiel 3 | - | 100 - 125 000 Dalton |
| Beispiel 4 | Retentat | 100 000 - 125 000 Dalton |
| Beispiel 5 | Retentat | 5000 - 125 000 Dalton |

## Beispiel 10

Die Molekulargewichtsbestimmung der Permeate aus Beispiel 4 und 5 erfolgte über Gelchromatographie an SEPHADEX G5O und G25 in 0,01 M Na-Acetat Puffer pH 7,0. Die Permeate sind durch ein Molgewicht zwischen 100 und 5000 Dalton charakterisiert.

## Beispiel 11

Von dem aus den Beispielen 4 und 5 gewonnenen Permeat der Membranfiltration wird eine 10-15 % (g/g) Lösung in Wasser hergestellt.

50 ml dieser Lösung werden mit einem Haushaltsmixer zu einer steifen Schaummasse verschlagen und portionsweise 100 g Puderzucker und 5 g Vanillezucker untergearbeitet. Die Schaummasse wird mit einer Sahnespritze geformt und 75 min. bei 120°C verbacken.

Die so erhaltenen Baisers zeichnen sich durch gleichmäßige feinporige Struktur und arttypischen Geschmack aus.

## Beispiel 12

Von dem aus den Beispielen 4 und 5 gewonnenen Retentat der Membranfiltration wird eine 1-2 % (g/g) Lösung in Wasser hergestellt.

15 ml dieser Lösung werden mit einem halben Teelöffel Salz, 1 Tropfen Essig und einem halben Teelöffel Senf verrührt und dann portionsweise insgesamt 125 ml Pflanzen-Öl unter starkem Rühren mit einem Haushaltsfixer eingearbeitet.

Die so gewonnene Salatmayonnaise ist eine vollkommen homogene Emulsion mit hoher Stabilität ohne nachteilige sensorische Eigenschaften.

**Patentansprüche** für die Vertragsstaaten BE, CH, DE, FR, GB, IT, LI, NL, SE

1. Verfahren zur Herstellung eines funktionellen Hydrolysats aus mikrobiellen Eiweißisolaten mit
- einem Proteingehalt über 90 Gew.-%,
- einem Nucleinsäuregehalt unter 2 Gew.-%,
- einem Lipidgehalt unter 1 Gew.-%,
- einer Suspendierbarkeit von 80-100 %,
- einer Schäumbarkeit, charakterisiert durch eine Verschäumungszahl von 4-7,
- einer Schaumstabilität, charakterisiert durch eine Halbwertszeit von 10-300 min.,
- einer Emulgierfähigkeit, charakterisiert durch eine Emulsionskapazität von 300-500 ml Öl/g Protein und
- einem Molekulargewicht zwischen 125 000 und 100 Dalton,
dadurch gekennzeichnet, daß eine mikrobielle Biomasse zunächst mit einer weitgehend wasserfreien Extraktionsmischung aus Methanol/Ammoniak zur Verminderung ihres Lipidgehalts und anschließend mit Wasser zur Verminderung des Nucleinsäuregehalts behandelt wird, dann die Gesamtproteinbiomasse durch eine oder mehrere Endoproteasen enzymatisch hydrolysiert wird und gegebenenfalls durch Ultrafiltration in ein Permeat und ein Retentat aufgetrennt wird.

2. Verfahren nach Anspruch 1, dadurch gekennzeichnet, daß als Endoprotease Trypsin allein oder im Gemisch mit anderen Endoproteasen eingesetzt wird.

3. Verfahren nach Anspruch 1, dadurch gekennzeichnet, daß die Auftrennung durch Ultrafiltration ohne Isolierung des Hydrolysats mit Hilfe eines Membranreaktors durchgeführt wird.

4. Funktionelles Hydrolysat aus mikrobiellen Eiweißisolaten, erhältlich nach Anspruch 1 und ferner gekennzeichnet durch
- einen Proteingehalt über 90 Gew.-%,
- einen Nucleinsäuregehalt unter 2 Gew.-%,
- einen Lipidgehalt unter 1 Gew.-%,
- eine Suspendierbarkeit von 80-100 %,
- eine Schäumbarkeit, charakterisiert durch eine Verschäumungszahl von 4-7,
- eine Schaumstabilität, charakterisiert durch eine Halbwertszeit von 10-300 min.,
- eine Emulgierfähigkeit, charakterisiert durch eine Emulsionskapazität von 300-500 ml Öl/g Protein,
- ein Molekulargewicht zwischen 125 000 und 100 Dalton.

5. Fraktion des funktionellen Hydrolysats, erhältlich nach Anspruch 1 als Permeat und ferner gekennzeichnet durch
- eine Löslichkeit in Wasser von 100 %,
- eine Schäumbarkeit, charakterisiert durch eine Verschäumungszahl von 9-16,
- eine Schaumstabilität, charakterisiert durch eine Halbwertszeit von 20-120 min.,
- eine Emulgierfähigkeit, charakterisiert durch eine Emulsionskapazität von 30-60 ml Öl/g Protein und
- ein Molekulargewicht zwischen 5 000 und 100 Dalton.

6. Fraktion des funktionellen Hydrolysats, erhältlich nach Anspruch 1 als Retentat und ferner charakterisiert durch
- eine Suspendierbarkeit von 70-90 %,
- eine Schäumbarkeit, charakterisiert durch eine Verschäumungszahl von 1-3,
- eine Schaumstabilität, charakterisiert durch eine Halbwertszeit von 2-1000 min.,
- eine Emulgierfähigkeit, charakterisiert durch eine Emulsionskapazität von 400-800 ml Öl/g Protein und
- ein Molekulargewicht zwischen 125 000 und 5 000 Dalton.

7. Verwendung des Eiweißhydrolysats gemäß Anspruch 4 oder einer daraus gewonnenen Eiweißfraktion als Nahrungsmittelzusatz.

8. Nahrungsmittel, dadurch gekennzeichnet, daß es das funtionelle Eiweißhydrolysat gemäß Anspruch 4 oder eine daraus gewonnene Eiweißfraktion enthält.

**Patentansprüche** für den Vertragsstaat AT

1. Verfahren zur Herstellung eines funktionellen Hydrolysats aus mikrobiellen Eiweißisolaten mit
- einem Proteingehalt über 90 Gew.-%,
- einem Nucleinsäuregehalt unter 2 Gew.-%,
- einem Lipidgehalt unter 1 Gew.-%,
- einer Suspendierbarkeit von 80-100 %,
- einer Schäumbarkeit, charakterisiert durch eine Verschäumungszahl von 4-7,
- einer Schaumstabilität, charakterisiert durch eine Halbwertszeit von 10-300 min.,
- einer Emulgierfähigkeit von 300-500 ml Öl/g Protein und
- einem Molekulargewicht zwischen 125 000 und 100 Dalton,
dadurch gekennzeichnet, daß eine mikrobielle Biomasse zunächst mit einer weitgehend wasserfreien Extraktionsmischung aus Methanol/Ammoniak zur Verminderung ihres Lipidgehalts und anschließend mit Wasser zur Verminderung des Nucleinsäuregehalts behandelt wird, dann die Gesamtproteinbiomasse durch eine oder mehrere Endoproteasen enzymatisch hydrolysiert wird und gegebenenfalls durch Ultrafiltration in ein Permeat und ein Retentat aufgetrennt wird.

2. Verfahren nach Anspruch 1, dadurch gekennzeichnet, daß als Endoprotease Trypsin allein oder im Gemisch mit anderen Endoproteasen eingesetzt wird.

3. Verfahren nach Anspruch 1, dadurch gekennzeichnet, daß die Auftrennung durch Ultrafiltration ohne Isolierung des Hydrolysats mit Hilfe eines Membranreaktors durchgeführt wird.

4. Fraktion des funktionellen Hydrolysats, erhältlich nach Anspruch 1 als Permeat und ferner gekennzeichnet durch
- eine Löslichkeit in Wasser von 100 %,
- eine Schäumbarkeit, charakterisiert durch eine Verschäumungszahl von 9-16,
- eine Schaumstabilität, charakterisiert durch eine Halbwertszeit von 20-120 min.,
- eine Emulgierfähigkeit, charakterisiert durch eine Emulsionskapazität von 30-60 ml Öl/g Protein,
- ein Molekulargewicht zwischen 5 000 und 100 Dalton.

5. Fraktion des funktionellen Hydrolysats, erhältlich nach Anspruch 1 als Retentat und ferner charakterisiert durch
- eine Suspendierbarkeit von 70-90 %,
- eine Schäumbarkeit, charakterisiert durch eine Verschäumungszahl von 1-3,
- eine Schaumstabilität, charakterisiert durch eine Halbwertszeit von 2-1000 min.,
- eine Emulgierfähigkeit, charakterisiert durch eine Emulsionskapazität von 400-800 ml Öl/g Protein und
- ein Molekulargewicht zwischen 125 000 und 5 000 Dalton.

6. Verwendung des nach Anspruch 1 bis 3 erhältlichen Eiweißhydrolysats oder einer daraus gewonnenen Eiweißfraktion als Nahrungsmittelzusatz.

**Claims** for the contracting States: BE, CH, DE, FR, GB, IT, LI, NL, SE.

1. Process for the production of a functional hydrolyzate from microbial protein isolates having
- a protein content of more than 90 % by weight,
- a nucleic acid content of less than 2 % by weight,
- a lipid content of less than 1 % by weight,
- a suspendability of 80-100 %,
- a foaming capacity characterized by a foaming index of 4-7,
- a foam stability characterized by a half-life of 10-300 minutes,
- an emulsifying capacity characterized by a value of 300-500 ml of oil/g of protein, and
- a molecular weight of between 125,000 and 100 Daltons,
wherein a microbial biomass is first treated with an essentially waterfree extraction mixture of methanol/ ammonia to reduce its lipid content and then with water to reduce its nucleic acid content, and then the whole protein content is hydrolyzed enzymatically with one or more endoproteases and if necessary separated by ultrafiltration into a permeate and a retentate.

2. The process as claimed in claim 1, wherein trypsin by itself or in a mixture with other endoproteases is used as the endoprotease.

3. The process as claimed in claim 1, wherein the separation is performed by ultrafiltration without isolation of the hydrolyzate with the help of a membrane reactor.

4. Functional hydrolyzate from microbial protein isolates, obtainable as claimed in claim 1 and further characterized by
- a protein content of more than 90 % by weight,
- a nucleic acid content of less than 2 % by weight,
- a lipid content of less than 1 % by weight,
- a suspendability of 80-100 %,
- a foaming capacity characterized by a foaming index of 4-7,
- a foam stability characterized by a half-life of 10-300 minutes,
- an emulsifying capacity characterized by a value of 300-500 ml of oil/g of protein, and
- a molecular weight of between 125,000 and 100 Daltons,

5. Fraction of the functional hydrolyzate, obtainable as claimed in claim 1 as a permeate and further characterized by:
- a solubility of 100 %,
- a foaming capacity characterized by a foaming index of 9-16,
- a foam stability characterized by a half-life of 20-120 minutes,
- an emulsifying capacity characterized by a value of 30-60 ml of oil/g of protein, and
- a molecular weight of between 5,000 and 100 Daltons.

6. Fraction of the functional hydrolyzate, obtainable as claimed in claim 1 as retentate and further characterized by:
- a suspendability of 70-90 %,
- a foaming capacity characterized by a foaming index of 1-3,
- a foam stability characterized by a half-life of 2-1,000 minutes,
- an emulsifying capacity characterized by a value of 400-800 ml of oil/g of protein, and
- a molecular weight of between 125,000 and 5,000 Daltons.

7. The use of the protein hydrolyzate according to claim 4 or a protein fraction obtained therefrom as food additive.

8. A food which contains the functional protein hydrolyzate as claimed in claim 4 or a protein fraction obtained therefrom.

**Claims** the contracting State: AT

1. Process for the production of a functional hydrolyzate from microbial protein isolates having
- a protein content of more than 90 % by weight,
- a nucleic acid content of less than 2 % by weight,
- a lipid content of less than 1 % by weight,
- a suspendability of 80-100 %,
- a foaming capacity characterized by a foaming index of 4-7,
- a foam stability characterized by a half-life of 10-300 minutes,
- an emulsifying capacity characterized by a value of 300-500 ml of oil/g of protein, and
- a molecular weight of between 125,000 and 100 Daltons,
wherein a microbial biomass is first treated with an essentially waterfree extraction mixture of methanol/ammonia to reduce its lipid content and then with water to reduce its nucleic acid content, and then the whole protein content is hydrolyzed enzymatically with one or more endoproteases and if necessary separated by ultrafiltration into a permeate and a retentate.

2. The process as claimed in claim 1, wherein trypsin by itself or in a mixture with other endoproteases is used as the endoprotease.

3. The process as claimed in claim 1, wherein the separation is performed by ultrafiltration without isolation of the hydrolyzate with the help of a membrane reactor.

4. Fraction of the functional hydrolyzate, obtainable as claimed in claim 1 as a permeate and further characterized by:
- a solubility of 100 %,
- a foaming capacity characterized by a foaming index of 9-16,
- a foam stability characterized by a half-life of 20-120 minutes,
- an emulsifying capacity characterized by a value of 30-60 ml of oil/g of protein, and
- a molecular weight of between 5,000 and 100 Daltons.

5. Fraction of the functional hydrolyzate, obtainable as claimed in claim 1 as retentate and further characterized by:
- a suspendability of 70-90 %,
- a foaming capacity characterized by a foaming index of 1-3,
- a foam stability characterized by a half-life of 2-1,000 minutes,
- an emulsifying capacity characterized by a value of 400-800 ml of oil/g of protein, and
- a molecular weight of between 125,000 and 5,000 Daltons.

6. The use of the protein hydrolyzate obtainable as claimed in claim 1 to 3 or a protein fraction obtained therefrom.

**Revendications** pour les Etats contractant: BE, CH, DE, FR, GB, IT, LI, NL, SE.

1. Procédé pour la préparation d'un hydrolysat fonctionnel à partir d'isolats de protéines microbiennes, ayant
   - une teneur en protéines de plus de 90 % en poids,
   - une teneur en acides nucléiques inférieure à 2 % en poids,
   - une teneur en lipides inférieure à 1 % en poids,
   - une aptitude à la mise en suspension allant de 80 à 100 %,
   - une aptitude au moussage caractérisée par un indice de moussage allant de 4 à 7,
   - une stabilité de la mousse caractérisée par une demi-période allant de 10 à 300 minutes,
   - une aptitude à la formation d'émulsions caractérisée par un pouvoir émulsionnant allant de 300 à 500 ml d'huile par g de protéine, et
   - une masse moléculaire comprise entre 125 000 et 100 daltons.
   caractérisé en ce que l'on traite d'abord une biomasse microbienne, pour la diminution de sa teneur en lipides, avec un mélange d'extraction, pratiquement anhydre, composé de méthanol et ammoniac, et ensuite avec de l'eau pour la diminution de la teneur en acides nucléiques, et on hydrolyse ensuite par voie enzymatique l'ensemble de la biomasse protéique, au moyen d'une ou plusieurs endoprotéases, et éventuellement on le sépare par ultrafiltration en un perméat et un rétentat.

2. Procédé selon la revendication 1, caractérisé en ce que l'on utilise, entant qu'endoprotéase, de la trypsine seule ou en mélange avec d'autres endoproteases.

3. Procédé selon la revendication 1, caractérisé en ce que l'on effectue la séparation par ultrafiltration à l'aide d'un réacteur à membrane, sans isolement de l'hydrolysat.

4. Hydrolysat fonctionnel provenant d'isolats de protéines microbiennes, préparable selon la revendication 1 et
   caractérisé en outre par
   - une teneur en protéines de plus de 90 % en poids,
   - une teneur en acides nucléiques inférieure à 2 % en poids,
   - une teneur en lipides inférieure à 1 % en poids,
   - une aptitude à la mise en suspension allant de 80 à 100 %,
   - une aptitude au moussage caractérisée par un indice de moussage de 4 à 7,
   - une stabilité de la mousse caractérisée par une demi-période allant de 10 à 300 minutes,
   - une aptitude à la formation d'émulsions caractérisée par un pouvoir émulsionnant allant de 300 à 500 ml d'huile par g de protéine, et
   - une masse moléculaire comprise entre 125 000 et 100 daltons.

5. Fraction de l'hydrolysat fonctionnel, préparable selon la revendication 1 en tant que perméat, et caractérisée en outre par
   - une solubilité dans l'eau de 100 %,
   - une aptitude au moussage caractérisée par un indice de moussage allant de 9 à 16,
   - une stabilité de la mousse caractérisée par une demi-période allant de 20 à 120 minutes,
   - une aptitude à la formation d'émulsions caractérisée par un pouvoir émulsionnant allant de 30 à 60 ml d'huile par g de protéine, et
   - une masse moléculaire comprise entre 5 000 et 100 daltons.

6. Fraction de l'hydrolysat fonctionnel, préparable selon la revendication 1 en tant que rétentat, et caractérisée en outre par
   - une aptitude à la mise en suspension allant de 70 à 90 %,
   - une aptitude au moussage caractérisée par un indice de moussage allant de 1 à 3,
   - une stabilité de la mousse caractérisée par une demi-période allant de 2 à 1000 minutes,
   - une aptitude à la formation d'émulsions caractérisée par un pouvoir émulsionnant allant de 400 à 800 ml d'huile par g de protéine, et
   - une masse moléculaire comprise entre 125 000 et 5 000 daltons.

7. Utilisation de l'hydrolysat de protéines selon la revendication 4, ou d'une fraction protéique obtenue à partir de celui-ci, en tant qu'additif pour aliments.

8. Aliment, caractérisé en ce qu'il contient l'hydrolysat fonctionnel de protéines selon la revendication 4, ou une fraction protéique obtenue a partir de celui-ci.


**Revendications** pour l'Etat contractant: AT

1. Procédé pour la préparation d'un hydrolysat fonctionnel à partir d'isolats de protéines microbiennes, ayant
   - une teneur en protéines de plus de 90 % en poids,
   - une teneur en acides nucléiques inférieure à 2 % en poids,
   - une teneur en lipides inférieure à 1 % en poids,
   - une aptitude à la mise en suspension allant de 80 à 100 %,
   - une aptitude au moussage caractérisée par un indice de moussage allant de 4 à 7,
   - une stabilité de la mousse caractérisée par une demi-période allant de 10 à 300 minutes,

- une aptitude à la formation d'émulsions caractérisée par un pouvoir émulsionnant allant de 300 à 500 ml d'huile par g de protéine, et
- une masse moléculaire comprise entre 125 000 et 100 daltons.

caractérisé en ce que l'on traite d'abord une biomasse microbienne, pour la diminution de sa teneur en lipides, avec un mélange d'extraction, pratiquement anhydre, composé de méthanol et ammoniac, et ensuite avec de l'eau pour la diminution de la teneur en acides nucléiques, et on hydrolyse ensuite par voie enzymatique l'ensemble de la biomasse protéique, au moyen d'une ou plusieurs endoprotéases, et éventuellement on le sépare par ultrafiltration en un perméat et un rétentat.

2. Procédé selon la revendication 1, caractérisé en ce que l'on utilise, en tant qu'endoprotéase, de la trypsine seule ou en mélange avec d'autres endoprotéases.

3. Procédé selon la revendication 1, caractérisé en ce que l'on effectue la séparation par ultrafiltration à l'aide d'un réacteur à membrane, sans isolement de l'hydrolysat.

4. Fraction de l'hydrolysat fonctionnel, préparable selon la revendication 1 en tant que perméat, et caractérisée en outre par
- une solubilité dans l'eau de 100 %,
- une aptitude au moussage caractérisée par un indice de moussage allant de 9 à 16,
- une stabilité de la mousse caractérisée par une demi-période allant de 20 à 120 minutes,
- une aptitude à la formation d'émulsions caractérisée par un pouvoir émulsionnant allant de 30 à 60 ml d'huile par g de protéine, et
- une masse moléculaire comprise entre 5 000 et 100 daltons.

5. Fraction de l'hydrolysat fonctionnel, préparable selon la revendication 1 en tant que rétentat, et caractérisée en outre par
- une aptitude à la mise en suspension allant de 70 à 90 %,
- une aptitude au moussage caractérisée par un indice de moussage allant de 1 à 3,
- une stabilité de la mousse caractérisée par une demi-période allant de 2 à 1000 minutes,
- une aptitude à la formation d'émulsions caractérisée par un pouvoir émulsionnant allant de 400 à 800 ml d'huile par g de protéine, et
- une masse moléculaire comprise entre 125 000 et 5 000 daltons.

6. Utilisation de l'hydrolysat de protéines préparable selon les revendications 1 à 3, ou d'une fraction protéique obtenue à partir de celui-ci, en tant qu'additif pour aliments.